# FASCICULE DE BREVET EUROPEEN

(11) **EP 0 591 065 B1**
(45) Date de publication et mention de la délivrance du brevet: **27.11.1996**
(21) Numéro de dépôt: 93402414.2
(22) Date de dépôt: 01.10.1993
(51) Int. Cl.: B62D 5/07, B60T 17/02, F15B 1/02, B60T 8/32

(54) **Dispositif de distribution de fluide hydraulique sous pression**
Verteilungseinrichtung für hydraulische Flüssigkeit unter Druck
A distribution device for pressurized hydraulic fluid

(30) Priorité: 01.10.1992 FR 9211922
(43) Date de publication de la demande: 06.04.1994
(73) Titulaire: VALEO, 75017 Paris (FR)
(72) Inventeur: Michel, Robert, F-95540 Mery Sur Oise (FR); Ledamoisel, Claude, F-95550 Bessancourt (FR); Randriazanamparany, Vévé Roland, F-92500 Rueil-Malmaison (FR)
(74) Mandataire: Gamonal, Didier

(56) Documents cités:
- EP-A- 0 469 615
- DE-A- 3 509 335
- GB-A- 2 165 015
- GB-A- 2 250 491

## Description

L'invention se rapporte à un dispositif de distribution de fluide hydraulique sous pression du type tel que défini dans le préambule de la revendication 1 et plus particulièrement destiné, dans un véhicule automobile, à permettre l'actionnement d'un organe de manoeuvre d'un sous-ensemble comme par exemple un embrayage piloté ou encore un système anti-blocage des roues (ABS) à partir d'un circuit hydraulique principal existant dans le véhicule. Ce dernier est généralement le circuit de circulation d'huile du système de direction assistée.

Dans la demande de brevet français FR-A-2670169, on a décrit un dispositif de distribution de fluide hydraulique sous pression, du genre mentionné ci-dessus, permettant de prélever une partie du fluide hydraulique d'un circuit principal pour alimenter, sous une pression régulée, un organe de manoeuvre d'un sous-ensemble du véhicule automobile, notamment un embrayage piloté. Ce dispositif fait appel notamment à un répartiteur de débit à tiroir. L'ensemble est agencé pour ne pas perturber le circuit principal, c'est-à-dire la direction hydraulique assistée tout en maintenant la pression disponible pour l'organe de manoeuvre comprise entre deux valeurs prédéterminées.

L'invention concerne un dispositif de distribution capable d'assurer la même fonction avec un agencement plus simple, moins coûteux et d'une haute fiabilité de fonctionnement.

Plus précisément, l'invention concerne un dispositif de distribution de fluide hydraulique sous pression pour un organe de manoeuvre dans un véhicule automobile muni d'un circuit hydraulique principal, et comprenant notamment un accumulateur de fluide hydraulique sous pression rechargé par ledit circuit hydraulique principal, pour alimenter ledit dispositif de manoeuvre, dans lequel ledit accumulateur est alimenté par ledit circuit principal via un clapet anti-retour, une vanne à restriction, commandée, étant connectée entre un point en amont dudit clapet et une bâche hydraulique, caractérisé en ce que ladite vanne à restriction est pilotée par un circuit de commande incluant des moyens de mesure de la pression du fluide délivré par ledit accumulateur, en ce que lesdits moyens de mesure de pression comportent un transducteur de pression comprenant un piston soumis à ladite pression de fluide délivré par ledit accumulateur et sollicitant un capteur électrique, du genre jauge de contrainte ou analogue, en ce que ledit circuit de commande comprend un calculateur connecté pour recevoir le signal électrique délivré par ledit capteur et en ce que ledit circuit de commande comporte une électrovanne connectée pour actionner une entrée de commande hydraulique de ladite vanne à restriction, ledit calculateur délivrant un signal de commande appliqué à l'entrée de signal électrique de l'électrovanne.

Le calculateur est de préférence celui qui est utilisé pour l'embrayage piloté ; il ne représente donc pas un coût supplémentaire dès lors que l'automobile est équipée à la fois d'un système de direction assistée et d'un système d'embrayage commandé. La restriction d'écoulement dans la vanne permet d'éviter des variations brutales de débit et de pression dans le circuit principal qui pourraient générer des vibrations ou des bruits.

Enfin, les moyens de mesure de la pression délivrée par l'accumulateur peuvent être complétés par des moyens de mesure de pression analogues (transducteur et capteur) connectés pour mesurer une pression stabilisée de commande, élaborée à partir de la pression de l'accumulateur. Les deux capteurs peuvent être agencés en un circuit de mesure différentiel permettant de compenser les effets dû aux variations de température du fluide hydraulique.

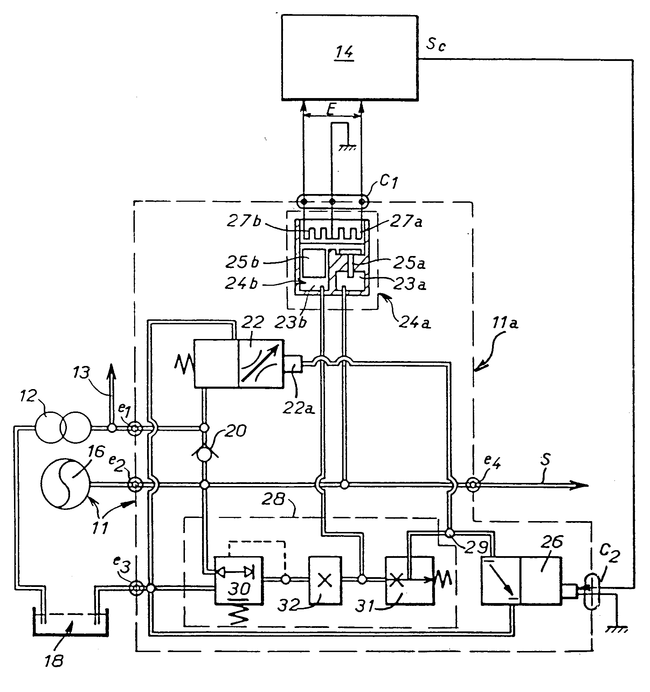

L'invention sera mieux comprise et d'autres avantages de celle-ci apparaîtront plus clairement à la lumière de la description qui va suivre d'un dispositif de distribution de fluide hydraulique sous pression conforme à son principe, donnée uniquement à titre d'exemple et faite en référence au dessin annexé dans lequel :
- la figure unique est une schéma de principe du dispositif de distribution connecté à d'autres équipements du véhicule automobile.

Sur le dessin, on a représenté un dispositif de distribution de fluide hydraulique sous pression 11 associé à une pompe 12 d'un circuit de fluide hydraulique principal 13 et à un calculateur 14. Le dispositif 11 comporte un certain nombre d'éléments spécifiques qui seront décrits plus loin et qui permettent de disposer, à une sortie S, d'un fluide hydraulique sous pression apte à permettre le fonctionnement d'un organe de manoeuvre d'un autre sous-ensemble de l'automobile, non représenté, plus particulièrement un embrayage piloté ou un système anti-blocage des roues.

Dans le cas où le véhicule est équipé de ces deux sous-ensembles, on prévoit deux dispositifs de distribution 11 distincts. Le dispositif de distribution comporte un accumulateur hydropneumatique 16 qui est en communication directe avec la sortie S. La pompe 12 prélève le fluide hydraulique dans un réservoir 18 formant bâche hydraulique. Le dispositif de distribution 11 comporte principalement un bloc 11a muni d'un certain nombre d'embouts de raccordement hydraulique e₁-e₄ destinés à être reliés à la pompe 12, à l'accumulateur 16, à la bâche 18 et à la sortie S, respectivement. Ce bloc comporte aussi des connecteurs électriques C₁, C₂ destinés à relier certains éléments à des entrées et sorties du calculateur 14, comme on le verra plus loin.

L'accumulateur 16 est alimenté par le circuit principal 13 via un clapet anti-retour 20 du dispositif de distribution 11. En outre, une vanne à restriction 22 à entrée de commande hydraulique 22a, est connectée entre un point de circuit situé en amont du clapet 20 et la bâche hydraulique 18. La vanne à restriction 22 est pilotée par un circuit de commande incluant des moyens de mesure de la pression du fluide délivré par l'accumulateur 16, c'est-à-dire la pression disponible à la sortie S. En effet, ces moyens de mesure comportent un transducteur de pression 24a comprenant un piston étagé 25a dont l'extrémité de surface la plus faible est soumise, dans une chambre 23a d'un alésage, à la pression délivrée par l'accumulateur 16. La portion de plus grande section de ce piston sollicite un capteur électrique 27a du genre jauge de contrainte ou analogue. L'ensemble forme un transducteur à signal de sortie électrique puisque la pression s'exerçant sur le piston est transcrite sous forme de signal électrique et appliquée à une entrée E du calculateur 14. Celui-ci délivre à sa sortie Sc un signal électrique de commande en fonction de la pression de l'accumulateur 16. Plus précisément, ce signal permet de commander la charge de l'accumulateur lorsque la pression atteint un seuil bas, par exemple 30 bars et d'arrêter la charge lorsque la pression est remontée jusqu'à un seuil haut, par exemple 50 bars. Le signal électrique de commande est appliqué à l'entrée de signal électrique d'une électrovanne 26 connectée pour actionner l'entrée de commande hydraulique 22a de la vanne à restriction 22. Pour ce faire, le dispositif de distribution comporte une source de fluide de commande 28, dont la sortie 29 est directement connectée à l'entrée 22a de la vanne 22, tandis que la partie hydraulique de l'électrovanne 26 est insérée entre cette entrée 22a et la bâche hydraulique 18. La source de fluide de commande 28 est constituée de quelques éléments simples et est elle-même alimentée en fluide par l'acculumateur 16. Cette source de fluide de commande comporte un montage en cascade comprenant principalement un réducteur de pression 30 et un régulateur de débit 31. Une restriction d'écoulement 32 est insérée entre le réducteur de pression et le régulateur de débit. La sortie du régulateur de débit 31 constitue la sortie 29 de la source de fluide de commande. L'entrée du réducteur de pression 30 constitue l'entrée d'alimentation de cette même source de fluide de commande, qui est reliée à l'accumulateur 16. Une pression régulée par exemple à 2 bars est disponible à la sortie de la restriction 32. Cette sortie de pression régulée permet d'assurer une compensation de température tendant à rendre la mesure de pression délivrée au calculateur 14 insensible aux variations de température du fluide hydraulique. Pour ce faire, le dispositif est équipé d'un autre transducteur de pression 24b comprenant un piston 25b soumis à la pression régnant dans une chambre 23b connectée à un point entre la restriction d'écoulement 32 et le régulateur de débit 31 et ce piston sollicite un capteur électique 27b du genre jauge de contrainte ou analogue. La sortie de signal électrique de ce capteur est exploitée en tant que référence pour une compensation de température, notamment. Plus précisément, les deux pistons des deux transducteurs sont agencés côte-à-côte, dans le même boîtier, ils ont des surfaces différentes, du côté hydraulique, pour tenir compte des différences de pressions qui leur sont appliquées et les deux capteurs correspondants sont agencés en un circuit de mesure différentielle, l'entrée E du calculateur 14 étant, bien entendu, une entrée différentielle. Le fonctionnement est le suivant:

Au départ, l'accumulateur 16 étant supposé déchargé, les vannes 22 et 26 sont dans les positions illustrées sur le dessin. La pression dans le circuit principal 13 s'établit à une valeur élevée, de l'ordre de 100 bars. Dans ces conditions, l'accumulateur 16 se charge via le clapet anti-retour 20. Pendant la charge de l'accumulateur, le fluide disponible à la sortie 29 retourne à la bâche 18 à travers l'électrovanne 26. Sous la pression faible disponible à la sortie 29, la vanne 22 n'est pas actionnée.

En revanche, lorsque la pression à la sortie S atteint la valeur maximum de 50 bars, le calculateur émet un signal électrique de commande appliqué à l'entrée de l'électrovanne 26 qui coupe la communication entre la sortie 29 et la bâche. Le débit s'établit alors vers l'entrée hydraulique 22a de la vanne à restriction 22 et cette dernière est actionnée, ce qui dérive le fluide hydraulique, en amont du clapet anti-retour 20, vers la bâche 18. Le clapet anti-retour 20 est fermé par la pression règnant à la sortie S. Au fur et à mesure de l'utilisation du fluide sous pression délivré par l'accumulateur 16, la pression à la sortie S diminue. Lorsque cette pression atteint le seuil inférieur de 30 bars, l'électrovanne 26 est désactivée par le calculateur 14, ce qui provoque le retour au repos de la vanne à restriction 22 et par conséquent la charge de l'accumulateur 16 jusqu'à sa valeur maximum de 50 bars.

Bien entendu, la valeur des pressions est donnée à titre indicatif, le seuil bas étant par exemple pb et le seuil haut PM.

Le dispositif de distribution permet de réguler ainsi le stockage dans un accumulateur d'huile sous pression émise par un répartiteur de pression ou un groupe électropompe.

## Revendications

1. Dispositif de distribution de fluide hydraulique sous pression pour un organe de manoeuvre dans un véhicule automobile muni d'un circuit hydraulique principal, et comprenant un accumulateur de fluide hydraulique sous pression (16) rechargé par ledit circuit hydraulique, pour alimenter ledit dispositif de manoeuvre, dans lequel ledit accumulateur est alimenté par ledit circuit principal via un clapet anti-retour (20), une vanne à restriction (22), commandée, étant connectée entre un point en amont dudit clapet et une bâche hydraulique (18), caractérisé en ce que ladite vanne à restriction est pilotée par un circuit de commande (14,24a,26) incluant des moyens de mesure de la pression du fluide délivré par ledit accumulateur, en ce que lesdits moyens de mesure de pression comportent un transducteur de pression (24a) comprenant un piston soumis à ladite pression de fluide délivré par ledit accumulateur et sollicitant un capteur électrique (27a), du genre jauge de contrainte ou analogue, en ce que ledit circuit de commande comprend un calculateur (14) connecté pour recevoir le signal électrique délivré par ledit capteur et en ce que ledit circuit de commande comporte une électrovanne (26) connectée pour actionner une entrée de commande hydraulique (22a) de ladite vanne à restriction, ledit calculateur (14) délivrant un signal de commande appliqué à l'entrée de signal électrique de l'électrovanne.

2. Dispositif selon la revendication 1, caractérisé en ce qu'il comporte en outre une source de fluide de commande (28) connectée à ladite entrée à commande hydraulique, et en ce que la partie hydraulique de ladite électrovanne (26) est insérée entre cette entrée de commande hydraulique et ladite bâche hydraulique.

3. Dispositif selon la revendication 2, caractérisé en ce que ladite source de fluide de commande comporte un montage en cascade d'un réducteur de pression (30) et d'un régulateur de débit (31), ledit montage étant établi entre ledit accumulateur (16) et ladite entrée de commande hydraulique de la vanne à restriction.

4. Dispositif selon la revendication 3, caractérisé en ce qu'une restriction d'écoulement (32) est insérée entre ledit réducteur de pression et ledit régulateur de débit.

5. Dispositif selon la revendication 4, caractérisé en ce qu'il comporte un autre transducteur de presssion (24b) comprenant un piston (25b) soumis à la pression délivrée entre ladite restriction d'écoulement et ledit régulateur de débit et sollicitant un capteur électrique (27b) du genre jauge de contrainte ou analogue, la sortie de signal électrique de ce capteur étant exploitée en tant que référence pour une compensation de température, notamment.

6. Dispositif selon la revendication 5, caractérisé en ce que les deux pistons des deux transducteurs ont des surfaces différentes et en ce que les deux capteurs précités (27a, 27b) correspondants sont agencés en un circuit de mesure différentiel.

## Claims

1. Distribution device for pressurised hydraulic fluid for an manoeuvring component in a motor vehicle provided with a main hydraulic circuit, and comprising a pressurised hydraulic fluid accumulator (16) recharged by the said hydraulic circuit, in order to supply the said manoeuvring device, in which the said accumulator is fed by the said main circuit via a non-return valve (20), a controlled restriction valve (22) being connected between a point upstream of the said non-return valve and a hydraulic tank (18), characterised in that the said restriction valve is controlled by a control circuit (14, 24a, 26) including means for measuring the pressure of the fluid delivered by the said accumulator, in that the said pressure measurement means include a pressure transducer (24a) comprising a piston subjected to the said pressure of fluid delivered by the said accumulator and acting on an electrical sensor (27a), of the strain gauge type or similar, in that the said control circuit comprises a computer (14) connected so as to receive the electrical signal delivered by the said sensor and in that the said control circuit includes a solenoid valve (26) connected so as to actuate a hydraulic control input (22a) of the said restriction valve, the said computer (14) delivering a control signal applied to the electrical signal input of the solenoid valve.

2. Device according to Claim 1, characterised in that it also includes a control fluid source (28) connected to the said hydraulic control input, and in that the hydraulic part of the said solenoid valve (26) is inserted between this hydraulic control input and the said hydraulic tank.

3. Device according to Claim 2, characterised in that the said control fluid source has a pressure reducer (30) and a flow regulator (31) mounted in cascade, the said mounting being established between the said accumulator (16) and the said hydraulic control input of the restriction valve.

4. Device according to Claim 3, characterised in that a flow restriction (32) is inserted between the said pressure reducer and the said flow regulator.

5. Device according to Claim 4, characterised in that it includes another pressure transducer (24b) comprising a piston (25b) subjected to the pressure delivered between the said flow restriction and the said flow regulator and acting on an electrical sensor (27b) of the strain gauge type or similar, the electrical signal output of this sensor being used as a reference for a temperature compensation, notably.

6. Device according to Claim 5, characterised in that the two pistons of the two transducers have different surface areas and in that the aforementioned corresponding two sensors (27a, 27b) are arranged in a differential measurement circuit.

## Patentansprüche

1. Verteilungseinrichtung für eine unter Druck stehende hydraulische Flüssigkeit für ein Betätigungsorgan in einem Kraftfahrzeug, das mit einem Haupthydraulikkreis ausgerüstet ist, zu der ein Speicher für eine unter Druck stehende hydraulische Flüssigkeit (16) gehört, der durch den besagten Haupthydraulikkreis nachgefüllt wird, um die besagte Betätigungsvorrichtung zu speisen, wobei der besagte Speicher durch den besagten Hauptkreis über ein Rückschlagventil (20) gespeist wird, wobei ein gesteuertes Begrenzungsventil (22) zwischen einem Punkt vor dem besagten Rückschlagventil und einem hydraulischen Vorratsbehälter (18) angeschlossen ist**, dadurch gekennzeichnet,** daß das besagte Begrenzungsventil durch eine Steuerschaltung (14, 24a, 26) angesteuert wird, die Mittel zur Messung des Drucks der durch den besagten Speicher abgegebenen Flüssigkeit enthält, daß die besagten Druckmeßmittel einen Druckgeber (24a) mit einem Kolben umfassen, auf den der besagte Druck der durch den besagten Speicher abgegebenen Flüssigkeit einwirkt und der einen elektrischen Meßfühler (27a) in der Art eines Dehnungsmeßstreifens oder einer ähnlichen Vorrichtung beansprucht, daß die besagte Steuerschaltung einen Rechner (14) umfaßt, der angeschlossen ist, um das durch den besagten Meßfühler abgegebene elektrische Signal zu empfangen, und daß die besagte Steuerschaltung ein Magnetventil (26) umfaßt, das angeschlossen ist, um einen Eingang (22a) für die hydraulische Steuerung des besagten Begrenzungsventils anzusteuern, wobei der besagte Rechner (14) ein Steuersignal liefert, das an den elektrischen Signaleingang des Magnetventils angelegt wird.

2. Einrichtung nach Anspruch 1**, dadurch gekennzeichnet,** daß sie außerdem eine hydraulische Versorgungseinheit (28) umfaßt, die an den besagten hydraulischen Steuereingang angeschlossen ist, und daß der hydraulische Teil des besagten Magnetventils (26) zwischen dem hydraulischen Steuereingang und dem besagten hydraulischen Vorratsbehälter eingefügt ist.

3. Einrichtung nach Anspruch 2**, dadurch gekennzeichnet,** daß die besagte hydraulische Versorgungseinheit eine Kaskadenschaltung mit einem Druckminderer (30) und einem Stromregler (31) umfaßt, wobei die besagte Kaskadenschaltung zwischen dem besagten Speicher (16) und dem besagten hydraulischen Steuereingang des Begrenzungsventils angeordnet ist.

4. Einrichtung nach Anspruch 3**, dadurch gekennzeichnet,** daß zwischen dem besagten Druckminderer und dem besagten Stromregler eine Druckbegrenzung (32) eingefügt ist.

5. Einrichtung nach Anspruch 4**, dadurch gekennzeichnet,** daß sie einen weiteren Druckgeber (24b) mit einem Kolben (25b) umfaßt, auf den der abgegebene Druck zwischen der besagten Strömungsbegrenzung und dem besagten Stromregler einwirkt und der einen elektrischen Meßfühler (27b) in der Art eines Dehnungsmeßstreifens oder einer ähnlichen Vorrichtung beansprucht, wobei der elektrische Signalausgang dieses Meßfühlers insbesondere als Bezugsgröße für einen Temperaturausgleich genutzt wird.

6. Einrichtung nach Anspruch 5**, dadurch gekennzeichnet,** daß die beiden Kolben der zwei Druckgeber unterschiedliche Flächen haben und daß die beiden entsprechenden vorgenannten Meßfühler (27a, 27b) in einer Differentialmeßschaltung angeordnet sind.
